# EUROPÄISCHE PATENTSCHRIFT

(11) **EP 2 531 829 B1**
(45) Veröffentlichungstag und Bekanntmachung des Hinweises auf die Patenterteilung: **23.10.2013**
(21) Anmeldenummer: 11701072.8
(22) Anmeldetag: 19.01.2011
(51) Int. Cl.: G01M 15/02, F16D 1/10

(54) **KUPPLUNGSVORRICHTUNG ZUM PRÜFEN EINES ANTRIEBSMOTORS**
COUPLING DEVICE FOR TESTING A DRIVE MOTOR
DISPOSITIF DE COUPLAGE POUR TESTER UNE MOTEUR D' ENTRAÎNEMENT

(30) Priorität: 02.02.2010 DE 102010001497
(43) Veröffentlichungstag der Anmeldung: 12.12.2012
(73) Patentinhaber: Robert Bosch GmbH, 70442 Stuttgart (DE)
(72) Erfinder: GARAVELIS, Theodoros, 71665 Vaihingen/Enz (DE)
(86) Internationale Anmeldenummer: PCT/EP2011/050666
(87) Internationale Veröffentlichungsnummer: WO 2011/095394

(56) Entgegenhaltungen:
- DE-C1- 10 225 886
- US-A- 4 092 855
- US-A- 4 567 778

## Beschreibung

### Stand der Technik

Die Erfindung betrifft eine Vorrichtung zum Prüfen eines Antriebsmotors nach dem Oberbegriff des Anspruchs 1.

Eine derartige, aus der Praxis bekannte Vorrichtung dient als Prüfvorrichtung zum Testen eines Antriebsmotors für einen Hybridantrieb. Dabei ist der Antriebsmotor als Elektromotor ausgebildet, dessen elektrische Eigenschaften mittels der Prüfeinrichtung getestet werden sollen. Hierzu muss die Prüfeinrichtung mit einem Eingangselement, beispielsweise einer Eingangswelle, mit der Abtriebswelle des Elektromotors bzw. des Antriebs mechanisch gekoppelt werden. Beim Stand der Technik erfolgt dies relativ aufwändig durch Aufspannen des Antriebsmotors und Verbinden des Antriebsmotors mit einer Vielzahl von Kupplungselementen, um die geforderte Genauigkeit (Rundlaufwinkligkeit und Konzentrizität) zu erreichen, wie z.B. in US 4567778 und US 4092855.

### Offenbarung der Erfindung

Ausgehend von dem dargestellten Stand der Technik liegt der Erfindung die Aufgabe zugrunde, eine Vorrichtung zum Prüfen eines Antriebsmotors nach dem Oberbegriff des Anspruchs 1 derart weiterzubilden, dass eine einfache Kopplung des Antriebsmotors mit der Prüfeinrichtung ermöglicht wird. Dies soll insbesondere mit geringem Montageaufwand erfolgen, wobei die geforderte exakte Ausrichtung des Antriebsmotors zur Prüfeinrichtung gewährleistet sein soll. Diese Aufgabe wird mit einer Vorrichtung zum Prüfen eines Antriebsmotors mit den Merkmalen des Anspruchs 1 gelöst. Der Erfindung liegt dabei die Idee zugrunde, durch ein antriebsspezifisches Kupplungselement einerseits das Abtriebselement des Antriebsmotors und andererseits eine Aufnahme der Prüfeinrichtung miteinander zu verbinden. Somit ist für einen Antriebsmotor nur ein antriebsspezifisches Kupplungselement erforderlich, so dass sich der Montageaufwand beträchtlich verringern lässt, wobei durch das antriebsspezifische Kupplungselement die erforderte Genauigkeit hinsichtlich der Ausrichtung von Antriebsmotor zur Prüfeinrichtung ermöglicht wird.

Vorteilhafte Weiterbildungen der erfindungsgemäßen Vorrichtung zum Prüfen eines Antriebsmotors sind in den Unteransprüchen angegeben. In den Rahmen der Erfindung fallen dabei sämtliche Kombinationen aus zumindest zwei von in den Ansprüchen, der Beschreibung und/oder den Figuren offenbarten Merkmalen.

In einer vorteilhaften konstruktiven Umsetzung der Erfindung ist es vorgesehen, dass die erste Aufnahme in dem Kupplungselement als Bohrung ausgebildet ist, in die ein als Antriebswelle ausgebildetes Abtriebselement des Antriebsmotors hineinragt und, dass die erste Aufnahme als Spannaufnahme ausgebildet ist, so dass die erste Aufnahme die Antriebswelle im gespannten Zustand des Kupplungselements kraftschlüssig umgreift. Diese konstruktive Ausbildung ermöglicht es, das Spannen bzw. Fixieren des Abtriebselements in dem Kupplungselement ohne zusätzlichen bzw. nur minimalen Montageaufwand zu ermöglichen, wobei gleichzeitig durch die Ausbildung der Aufnahme als Bohrung eine Zentrierung der Antriebswelle zur Prüfeinrichtung ermöglicht wird.

Weiterhin ist es vorteilhaft, wenn die zweite Aufnahme mit der äußeren Kontur des Kupplungselements zumindest formschlüssig zusammenwirkt. Über eine derartige formschlüssige Verbindung lassen sich relativ hohe Drehmomente vom Antriebsmotor in die Prüfeinrichtung übertragen.

Zum einfachen Spannen des Kupplungselements bei relativ kompaktem Aufbau der Prüfeinrichtung wird vorgeschlagen, dass die Prüfvorrichtung eine drehbar gelagerte Hohlwelle aufweist, an dessen einem Ende eine zweite Aufnahme angeordnet ist und, dass in der Hohlwelle ein insbesondere als Zugstange ausgebildetes Spannelement einführbar ist, das mit der Kupplungseinrichtung auf der der ersten Aufnahme abgewandten Seite des Kupplungselements zusammenwirkt,

Zur Verbindung zwischen dem Kupplungselement und dem Spannelement wird eine mechanische Verbindung, insbesondere eine Gewindeverbindung, vorgeschlagen. Mittels einer derartigen mechanischen Verbindung lassen sich auf relativ einfache Weise hohe Zugkräfte auf das Spannelement übertragen und es wird darüber hinaus eine einfache Kopplung des Spannelements mit dem Kupplungselement ermöglicht.

Besonders bevorzugt ist es darüber hinaus, wenn die zweite Aufnahme und die äußere Kontur des Kupplungselements polygonartig ausgebildet sind. Dies begünstigt die Möglichkeit der Übertragung relativ hoher Drehmomente vom Antriebsmotor in die Hohlwelle der Prüfeinrichtung.

Besonders bevorzugt ist darüber hinaus der Einsatz der Vorrichtung zur Prüfung von Antriebsmotoren, die Bestandteil eines Hybridantriebs in einem Kraftfahrzeug sind.

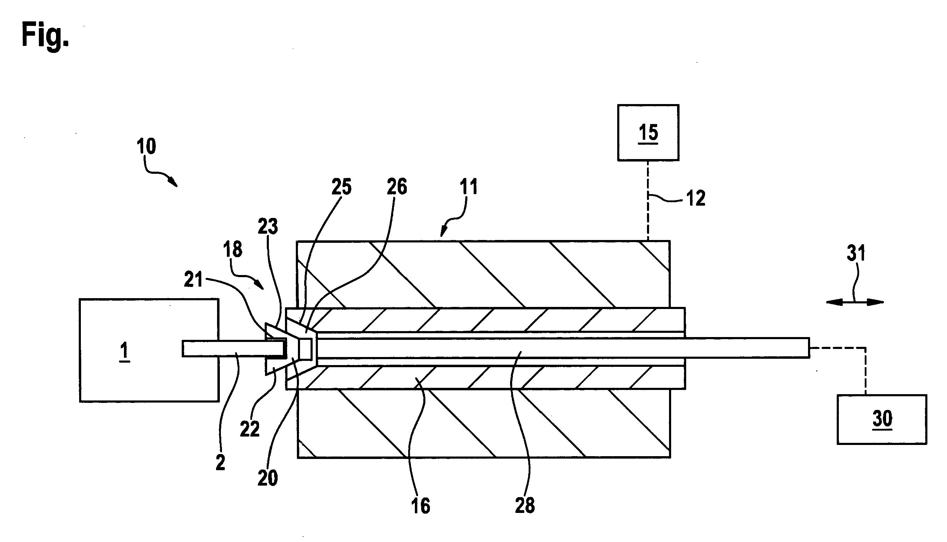

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in der einzigen Figur eine vereinfachte, schematische Darstellung einer Vorrichtung zum Prüfen eines als Elektromotor ausgebildeten Antriebsmotors.

In der Figur ist eine Vorrichtung 10 zum Prüfen eines als Elektromotor 1 ausgebildeten Antriebsmotors dargestellt. Hierbei handelt es sich bei dem Elektromotor 1 insbesondere um einen Elektromotor 1, der als Bestandteil eines Hybridantriebs in einem Kraftfahrzeug dient. Die Vorrichtung 10 dient zum Prüfen der elektrischen oder sonstiger Eigenschaften des Elektromotors 1 und weist eine als Asynchronmaschine oder Synchronmaschine ausgebildete Prüfeinrichtung 11 auf. Die Prüfeinrichtung 11 ist über eine Leitung 12 mit einer Steuer-/Auswerteeinrichtung 15 gekoppelt.

Zum Prüfen des Elektromotors 1 wird der Elektromotor 1 mit einer nicht dargestellten Spannungsquelle gekoppelt, wobei der Elektromotor 1 die Prüfeinrichtung 11 antreibt und aus den dabei gewonnenen Daten (z.B. übertragenes Drehmoment, Drehzahl, usw.) auf die gewünschten Eigenschaften des Elektromotors 1 geschlossen werden kann. Hierbei wird der Elektromotor 1 motorisch betrieben. Ebenso ist ein generatorischer Betrieb denkbar, wobei dann die Antriebswelle 2 des Elektromotors über die Asynchronmaschine oder Synchronmaschine der Prüfvorrichtung 11 angetrieben wird.

Die Prüfeinrichtung 11 weist eine Hohlwelle 16 auf, die Bestandteil einer Kupplungseinrichtung 18 ist. Die Kupplungseinrichtung 18 umfasst ferner ein antriebsspezifisches Kupplungselement 20. Das Kupplungselement 20 weist eine als Bohrung ausgebildete erste Aufnahme 21 auf, deren Durchmesser insbesondere dem Durchmesser einer Antriebswelle 2 des Elektromotors 1 angepasst ist. Das Kupplungselement 20 weist insbesondere im Bereich der ersten Aufnahme 21 wenigstens einen in der Wand des Kupplungselements 20 ausgebildeten Schlitz 22 auf, so dass das Kupplungselement 20 zumindest im Bereich der Aufnahme 21 bei einer von außen wirkenden Kraft verformbar ist. Damit lässt sich die Antriebswelle 2 in der ersten Aufnahme 21 in Art eines Spannkonus kraftschlüssig fixieren. Die Außenkontur 23 des Kupplungselements 20 ist zumindest im Bereich der ersten Aufnahme 21 kegelartig und vorzugsweise polygonartig gestaltet. Die erste Aufnahme 21 wirkt mit einer zweiten Aufnahme 25 zusammen. Die zweite Aufnahme 25 ist als Innenkontur 26 in der Hohlwelle 16 ausgebildet. Hierbei ist die Innenkontur 26 der Hohlwelle 16 trichterartig und ebenfalls polygonartig ausgebildet, so dass die Außenkontur 23 des Kupplungselements 20 mit der Innenkontur 26 der zweiten Aufnahme 25 formschlüssig zusammenwirken kann.

Das Kupplungselement 20 ist auf der der ersten Aufnahme 21 gegenüberliegenden Seite mit einer Zugstange 28 verbindbar. Insbesondere besteht die Verbindung in einer mechanischen Verbindung, insbesondere einer Gewindeverbindung. Hierzu ist beispielhaft an einem zylindrischen Abschnitt des Kupplungselements 20 ein Außengewinde (nicht dargestellt) angeordnet bzw. ausgebildet welches mit einem entsprechenden Innengewinde (ebenfalls nicht dargestellt) zusammenwirkt, das in der Zugstange 28 ausgebildet ist.

Die Zugstange 28 ist mit einer Zugeinrichtung 30 gekoppelt, die die Zugstange 28 in Richtung des Doppelpfeils 31 bewegen kann. Die Zugeinrichtung 30 ist hierbei mechanisch, hydraulisch, pneumatisch oder elektrisch in geeigneter Art und Weise ausgebildet.

Die Kopplung des Elektromotors 1 mit der Prüfeinrichtung 11 erfolgt auf folgende Weise: Zunächst wird das antriebsspezifische Kupplungselement 20 mit seiner ersten Aufnahme 21 auf das Ende der Antriebswelle 2 gesteckt. Anschließend wird das Kupplungselement 20 in die Hohlwelle 16 eingeführt. Danach wird die Zugstange 28 über die Gewindeverbindung mit dem Kupplungselement 20 verbunden und dann mittels der Zugeinrichtung 30 in die Hohlwelle 16 hineingezogen. Dabei wird die Außenkontur 23 des Kupplungselements 20 elastisch deformiert, so dass die Antriebswelle 2 des Elektromotors 1 kraftschlüssig in der ersten Aufnahme 21 gehalten ist. Gleichzeitig wirkt die Außenkontur 23 des Kupplungselements 20 kraft- und formschlüssig mit der Innenkontur 26 der zweiten Aufnahme 25 in der Hohlwelle 16 zusammen. Sobald das Spannen der Zugstange 26 abgeschlossen ist, kann der Elektromotor 1, wie oben beschrieben, betrieben werden, um diesen zu prüfen.

## Patentansprüche

1. Vorrichtung (10) zum Prüfen eines Antriebsmotors (1), bei der ein Abtriebselement (2) des Antriebsmotors (1) in Wirkverbindung mit einem Eingangselement (16) einer Prüfeinrichtung (11) angeordnet ist, wobei die Verbindung zwischen dem Abtriebselement (2) und dem Eingangselement (16) mittels einer Kupplungseinrichtung (18) erfolgt, wobei die Kupplungseinrichtung (18) ein antriebsspezifisches Kupplungselement (20) aufweist, wobei das Kupplungselement (20) eine erste Aufnahme (21) zur Aufnahme des Abtriebselements (2) aufweist, und wobei das Kupplungselement (20) mit einer äußeren Kontur (23) mit einer in der Prüfeinrichtung (11) ausgebildeten zweiten Aufnahme (25) zusammenwirkt,
**dadurch gekennzeichnet,**
**dass** die erste Aufnahme (21) in dem Kupplungselement (20) als Bohrung ausgebildet ist, in die ein als Antriebswelle (2) ausgebildetes Abtriebselement des Antriebsmotors (1) hineinragt, dass die erste Aufnahme (21) als Spannaufnahme ausgebildet ist, so dass die erste Aufnahme (21) die Antriebswelle (2) im gespannten Zustand des Kupplungselements (20) kraftschlüssig umgreift, dass die zweite Aufnahme (25) mit der äußeren Kontur (23) des Kupplungselements (20) zumindest formschlüssig zusammenwirkt, dass eine drehbar gelagerte Hohlwelle (16) vorgesehen ist, an dessen einem Ende die zweite Aufnahme (25) angeordnet ist, und dass in der Hohlwelle (16) ein als Zugstange (28) ausgebildetes Spannelement angeordnet ist, das mit dem Kupplungselement (20) auf der der ersten Aufnahme (21) abgewandten Seite des Kupplungselements (20) zum Erzeugen einer kraft- und formschlüssigen Verbindung zwischen der äußeren Kontur (23) des Kupplungselements (20) und einer Innenkontur (26) der zweiten Aufnahme (25) verbunden ist.

2. Vorrichtung nach Anspruch 1,
**dadurch gekennzeichnet,**
**dass** die Hohlwelle (16) Bestandteil einer Antriebswelle für die als Elektromaschine (1), insbesondere als Asynchronmaschine oder Synchronmaschine ausgebildete Prüfeinrichtung (11) ist.

3. Vorrichtung nach Anspruch 2,
**dadurch gekennzeichnet,**
**dass** die Verbindung zwischen dem als Zugstange (28) ausgebildeten Spannelement und dem Kupplungselement (20) mechanisch, insbesondere über eine Gewindeverbindung, erfolgt.

4. Vorrichtung nach einem der Ansprüche 1 bis 3,
**dadurch gekennzeichnet,**
**dass** die zweite Aufnahme (25) und die äußere Kontur (23) des Kupplungselements (20) jeweils polygonartig ausgebildet ist und formschlüssig zusammenwirken.

5. Vorrichtung nach einem der Ansprüche 1 bis 4,
**dadurch gekennzeichnet,**
**dass** das als Zugstange (28) ausgebildete Spannelement entgegen der Richtung des Kupplungselements (20) mittels einer Zugeinrichtung (30) kraftbeaufschlagbar ist.

6. Vorrichtung nach Anspruch 5,
**dadurch gekennzeichnet,**
**dass** die Zugeinrichtung (30) einen elektrischen, mechanischen, hydraulischen oder pneumatischen Antrieb aufweist.

7. Vorrichtung nach einem der Ansprüche 1 bis 6,
**dadurch gekennzeichnet,**
**dass** der Antrieb (1) als elektrischer Antriebsmotor eines Hybridantriebs ausgebildet ist.

## Claims

1. Apparatus (10) for testing a drive motor (1), in which apparatus (10) an output element (2) of the drive motor (1) is arranged in a drive connection with an input element (16) of a test device (11), the connection between the output element (2) and the input element (16) being effected by means of a coupling device (18), the coupling device (18) having a drive-specific coupling element (20), the coupling element (20) having a first receptacle (21) for receiving the output element (2), and the coupling element (20) interacting by way of an outer contour (23) with a second receptacle (25) which is formed in the test device (11),
**characterized**
**in that** the first receptacle (21) is formed in the coupling element (20) as a hole into which an output element, configured as a drive shaft (2), of the drive motor (1) protrudes, in that the first receptacle (21) is configured as a clamping receptacle, with the result that the first receptacle (21) engages non-positively around the drive shaft (2) in the clamped state of the coupling element (20), in that the second receptacle (25) interacts with the outer contour (23) of the coupling element (20) at least in a positively locking manner, in that a rotatably mounted hollow shaft (16) is provided, at one end of which the second receptacle (25) is arranged, and in that a clamping element which is configured as a pull rod (28) is arranged in the hollow shaft (16), which clamping element is connected to the coupling element (20) on that side of the coupling element (20) which faces away from the first receptacle (21) in order to produce a non-positive and positively locking connection between the outer contour (23) of the coupling element (20) and an inner contour (26) of the second receptacle (25).

2. Apparatus according to Claim 1, **characterized in that** the hollow shaft (16) is a constituent part of a drive shaft for the test device (11) which is configured as an electric machine (1), in particular as an asynchronous machine or synchronous machine.

3. Apparatus according to Claim 2, **characterized in that** the connection between the clamping element which is configured as a pull rod (28) and the coupling element (20) is effected mechanically, in particular via a threaded connection.

4. Apparatus according to one of Claims 1 to 3, **characterized in that** the second receptacle (25) and the outer contour (23) of the coupling element (20) are in each case of polygonal configuration and interact in a positively locking manner.

5. Apparatus according to one of Claims 1 to 4, **characterized in that** the clamping element which is configured as a pull rod (28) can be loaded with force counter to the direction of the coupling element (20) by means of a pulling device (30).

6. Apparatus according to Claim 5, **characterized in that** the pulling device (30) has an electric, mechanical, hydraulic or pneumatic drive.

7. Apparatus according to one of Claims 1 to 6, **characterized in that** the drive (1) is configured as an electric drive motor of a hybrid drive.

## Revendications

1. Dispositif (10) pour tester un moteur d'entraînement (1), dans lequel un élément de sortie (2) du moteur d'entraînement (1) est disposé de manière à être en liaison fonctionnelle avec un élément d'entrée (16) d'un dispositif de test (11), la liaison entre l'élément de sortie (2) et l'élément d'entrée (16) s'effectuant au moyen d'un dispositif d'accouplement (18), le dispositif d'accouplement (18) comprenant un élément d'accouplement (20) spécifique à l'entraînement, l'élément d'accouplement (20) comprenant un premier logement (21) pour loger l'élément de sortie (2) et l'élément d'accouplement (20) coopérant, par un contour extérieur (23), avec un deuxième logement (25) réalisé dans le dispositif de test (11), **caractérisé en ce que**
le premier logement (21) dans l'élément d'accouplement (20) est réalisé sous forme d'alésage dans lequel pénètre un élément de sortie du moteur d'entraînement (1) réalisé sous forme d'arbre d'entraînement (2), **en ce que** le premier logement (21) est réalisé sous forme de logement de serrage, de telle sorte que le premier logement (21) vienne en prise par force autour de l'arbre d'entraînement (2) à l'état serré de l'élément d'accouplement (20), **en ce que** le deuxième logement (25) coopère au moins par complémentarité de formes avec le contour extérieur (23) de l'élément d'accouplement (20), **en ce qu'**il est prévu un arbre creux (16) monté à rotation, à l'une des extrémités duquel est disposé le deuxième logement (25), et **en ce qu'**un élément de serrage réalisé sous forme de tige de traction (28) est disposé dans l'arbre creux (16), lequel élément de serrage est relié à l'élément d'accouplement (20) du côté de l'élément d'accouplement (20) opposé au premier logement (21) pour générer une liaison par force et par complémentarité de formes entre le contour extérieur (23) de l'élément d'accouplement (20) et un contour intérieur (26) du deuxième logement (25).

2. Dispositif selon la revendication 1,
**caractérisé en ce que**
l'arbre creux (16) fait partie d'un arbre d'entraînement pour le dispositif de test (11) réalisé sous forme de machine électrique (1), en particulier sous forme de machine asynchrone ou de machine synchrone.

3. Dispositif selon la revendication 2,
**caractérisé en ce que**
la liaison entre l'élément de serrage réalisé sous forme de tige de traction (28) et l'élément d'accouplement (20) s'effectue de manière mécanique, en particulier par le biais d'une liaison filetée.

4. Dispositif selon l'une quelconque des revendications 1 à 3,
**caractérisé en ce que**
le deuxième logement (25) et le contour extérieur (23) de l'élément d'accouplement (20) sont respectivement réalisés sous forme polygonale et coopèrent par complémentarité de formes.

5. Dispositif selon l'une quelconque des revendications 1 à 4,
**caractérisé en ce que**
l'élément de serrage réalisé sous forme de tige de traction (28) peut être soumis à une force au moyen d'un dispositif de traction (30) dans le sens opposé à l'élément d'accouplement (20).

6. Dispositif selon la revendication 5,
**caractérisé en ce que**
le dispositif de traction (30) comprend un entraînement électrique, mécanique, hydraulique ou pneumatique.

7. Dispositif selon l'une quelconque des revendications 1 à 6,
**caractérisé en ce que**
l'entraînement (1) est réalisé sous forme de moteur d'entraînement électrique d'un entraînement hybride.
